# EUROPÄISCHE PATENTANMELDUNG

(11) **EP 0 978 713 A2**
(43) Veröffentlichungstag der Anmeldung: **09.02.2000**
(21) Anmeldenummer: 99114382.7
(22) Anmeldetag: 22.07.1999
(51) Int. Cl.: G01L 3/04

(54) **Drehwinkelbegrenzung durch eine Trennfuge im Gehäuse eines Drehmomentsensors**

(30) Priorität: 03.08.1998 DE 19834897
(71) Anmelder: Mannesmann VDO Aktiengesellschaft, 60388 Frankfurt am Main (DE)
(72) Erfinder: Bachnak, Nouhad, 60326 Frankfurt (DE)
(74) Vertreter: Rassler, Andrea, Dipl.-Phys.

(57) **Zusammenfassung**

Bei einem Sensor (1) werden zunächst zwei Abschnitte (3, 12) einer Lenkwelle (4) mittels eines eine Messzelle (9) tragenden Torsionsstabes (10) verbunden. Zum Schutz gegen Überlastung hat der Sensor (1) einen Drehwinkelbegrenzer (7), welcher durch treppenförmig längs und quer verlaufende Trennfugen (5, 6) in dem zunächst mit den Abschnitten (3, 12) und dem Torsionsstab (10) verbundenen Gehäuse (2) gebildet ist. Hierdurch ist der Torsionsstab (10) gegenüber dem Gehäuse (2) des Sensors (1) begrenzt verdrehbar, wobei die Drehwinkeldifferenz durch die Breite der längsverlaufenden Trennfuge (5) bestimmt ist. Der Drehwinkelbegrenzer (7) ist dadurch weitgehend unabhängig von Maßabweichungen bei der Montage und gestattet selbst bei geringen Drehwinkeldifferenzen eine exakte Bestimmung der aufgebrachten Drehkräfte.

## Beschreibung

Die Erfindung betrifft ein Verfahren zur Herstellung eines ein Gehäuse und eine Messzelle aufweisenden Sensors zur Erfassung eines Drehmomentes, insbesondere eines in eine Lenkwelle eines Kraftfahrzeuges eingeleiteten Drehmomentes, mit einem Drehwinkelbegrenzer zur Begrenzung einer Drehwinkeldifferenz zwischen dem Gehäuse und der Messzelle zum Schutz des Sensors vor Überlastung. Weiterhin betrifft die Erfindung einen mit diesem Verfahren hergestellten Sensor.

Solche Sensoren werden bei Servolenkungen moderner Kraftfahrzeuge eingesetzt, um die auf die Lenkung wirkenden Kräfte zu messen. Die so gewonnenen Messwerte werden dann als Regelgröße einer Steuereinheit zugeführt, die daraus ein Signal für eine vorzugsweise elektrische oder elektro-hydraulische Servolenkung errechnet. Hierbei wird die unterhalb eines vorbestimmten Drehmomentes liegende Lenkbetätigungskraft zunächst nicht unterstützt, so dass der Fahrer die Lenkbetätigungskraft allein aufbringen muss und ihm so eine Rückmeldung der auf die Lenkung einwirkenden Kräfte vermittelt wird. Oberhalb dieser Schwelle sorgt die Steuereinheit für eine Servounterstützung und damit für eine gleichbleibende Lenkbetätigungskraft, so dass die vom Fahrer aufzubringende Lenkbetätigungskraft immer in einem komfortablen Bereich bleibt. Das früher bei Servolenkungen häufig kritisierte "schwammige Fahrgefühl" kann somit vermieden werden.

Zur Erfassung der Drehkräfte wird der Sensor in einen Abschnitt der Lenkwelle eingesetzt, so dass die in die Lenkwelle eingeleiteten Kräfte von einem eine Messzelle tragenden Torsionsstab übertragen werden. Die eingeleitete Lenkkraft bewirkt daher eine Torsion, die von der Messzelle erfasst wird und die beispielsweise als Dehnung mittels Dehnungsmessstreifen gemessen wird. Aus Sicherheitsgründen ist beim Einsatz eines solchen Sensors ein Drehwinkelbegrenzer vorzusehen, der die Drehwinkeldifferenz zwischen den beiden mittels des Sensors verbundenen Abschnitten der Lenkwelle begrenzt, so dass eine Störung der Messzelle, beispielsweise durch Überlastung und Bruch des Torsionsstabes, nicht zu einem völligen Ausfall der Lenkung führt. Zusätzlich dient der Drehwinkelbegrenzer dem Schutz der Messzelle vor einer zu großen Auslenkung, die zu einer plastischen Verformung und damit zu einer Beschädigung der Messzelle führen kann. Dieser zumeist als Mitnehmer ausgeführte Drehwinkelbegrenzer ermöglicht hierzu lediglich eine eingeschränkte Drehwinkeldifferenz, die üblicherweise bei ca. 5° liegt. Sobald diese maximale Drehwinkeldifferenz überschritten ist, werden die auf die Lenkwelle wirkenden Kräfte im wesentlichen mittels des Drehwinkelbegrenzers übertragen.

Nachteilig bei den bekannten Sensoren wirkt sich aus, dass die Drehwinkeldifferenz relativ groß gewählt werden muss, da anderenfalls eine Erfassung korrekter Messwerte aufgrund von Abweichungen bei der Montage des Sensors nicht möglich ist. Bei kleineren zulässigen Drehwinkeldifferenzen führen die Toleranzwerte im ungünstigen Fall dazu, dass die Drehbewegung bereits von dem Drehwinkelbegrenzer übertragen wird, bevor eine Messwerterfassung möglich ist. Diese relativ große max. Drehwinkeldifferenz wirkt sich auf das Systemverhalten nachteilig aus und ist für den Fahrer unter Umständen spürbar. Insbesondere kann daraus ein zeitlich verzögertes Systemverhalten resultieren, das zu einer Verunsicherung des Fahrers führt. Vor allem die ausschließlich elektrisch arbeitenden Servolenkungen erfordern hingegen schnelle und genaue Messwerte, die bei derart hohen zulässigen Drehwinkeldifferenzen nicht gewährleistet werden können.

Der Erfindung liegt das Problem zugrunde, ein Verfahren zur Herstellung eines Sensors der eingangs genannten Art so zu gestalten, dass die Messwerterfassung bereits bei kleinen Drehwinkeldifferenzen mit hoher Genauigkeit vorgenommen werden kann. Dabei soll zugleich die Herstellung vereinfacht und der Montageaufwand gesenkt werden. Weiterhin soll ein mittels des erfindungsgemäßen Verfahrens hergestellter Sensor geschaffen werden.

Dieses erstgenannte Problem wird erfindungsgemäß dadurch gelöst, dass zunächst die Messzelle und das Gehäuse zu einer Baueinheit verbunden werden und anschließend der Drehwinkelbegrenzer durch Trennen des Gehäuses und der Messzelle entlang einer vorbestimmten Trennfuge derart gebildet wird, dass ein erstes Gehäuseteil mit einem ersten Ende und ein zweites Gehäuseteil mit einem zweiten Ende der Messzelle verbunden bleibt und dass eine begrenzte Drehwinkeldifferenz zwischen den Gehäuseteilen und der Messzelle möglich ist. Hierdurch können die Messzelle und das Gehäuse zunächst mit relativ großen Toleranzwerten hergestellt und miteinander verbunden werden. Anschließend wird die durch den Drehwinkelbegrenzer zulässige, maximale Drehwinkeldifferenz ausschließlich durch die Ausgestaltung der Trennfuge, insbesondere deren Breite, bestimmt, so dass Maßabweichungen der Bauteile keinerlei Einfluss haben- Dadurch sind bereits sehr geringe Drehwinkeldifferenzen für eine genaue Messung ausreichend, so dass es zu keinem verzögerten Übertragungsverhalten kommen kann. Zugleich lässt sich die Montage aufgrund der höheren, zulässigen Toleranzwerte wesentlich erleichtern.

Die Trennfuge könnte an dem Gehäuse derart angebracht werden, dass beim Überschreiten der maximalen Drehwinkeldifferenz eine reibschlüssige bzw. kraftschlüssige Verbindung der beiden Gehäuseteile erreicht wird. Besonders günstig ist jedoch eine Ausführungsform der Erfindung, bei der die Trennfuge zur formschlüssigen Verbindung der Gehäuseteile ausgeführt wird. Dadurch ist die maximale Drehwinkeldifferenz zwischen dem Gehäuse und der Messzelle mit hoher Genauigkeit durch die Gestaltung der Trennfuge vorbestimmt, wobei insbesondere Verschleißeinflüsse unerheblich sind. Die maximale Drehwinkeldifferenz lässt sich im Herstellungsprozess leicht durch die Fugenbreite einstellen, wodurch eine Anpassung an unterschiedliche Anwendungszwecke leicht möglich ist.

Hierzu ist eine Weiterbildung des erfindungsgemäßen Verfahrens besonders gut geeignet, bei dem die Trennfuge zur Verbindung der Gehäuseteile nach Art einer Klauenverbindung ausgeführt wird. Hierbei greift zumindest ein Klaue in eine korrespondierende Ausnehmung, so dass zumindest jeweils eine Kontaktfläche zwischen der Klaue und der Ausnehmung beim Überschreiten der max. Drehwinkeldifferenz in der einen Richtung und in der Gegenrichtung gebildet ist. Die Anzahl der so ausgeführten Klauen ist grundsätzlich beliebig und kann in der Praxis beispielsweise bei zwei liegen.

Eine Weiterbildung des erfindungsgemäßen Verfahrens ist dann besonders vorteilhaft, wenn die Messzelle mittels eines Passstiftes mit dem Gehäuse verbunden wird. Hierdurch lässt sich die Baueinheit aus Gehäuse und Messzelle weitgehend spannungsfrei herstellen. Das anschließende Trennen des Gehäuses führt daher nicht zu einer Veränderung der relativen Lage der Bauteile zueinander. Diese mögliche Fehlerquelle bei der Messwerterfassung kann dadurch zuverlässig vermieden werden.

Eine andere, besonders günstige Weiterbildung des Verfahrens ist dann gegeben, wenn die Messzelle und das Gehäuse miteinander zu einer Baueinheit verklebt werden. Diese Ausgestaltung des Verfahrens erfordert lediglich geringe Maßgenauigkeiten der einzelnen Bauteile des Sensors. Die Verbindungsstellen werden lediglich mittels Klebstoff zusammengefügt, wobei die Bauteile weitgehend spannungsfrei gehalten werden können.

Eine Ausführungsform der Erfindung ist dann besonders vorteilhaft, wenn die Trennfuge auf einer Mantelfläche des Gehäuses angebracht wird. Hierdurch lässt sich eine kompakte Ausführungsform des Sensors erreichen, wodurch sich die äußeren Abmessungen der Lenkung nicht verändern. Auch die maximal übertragbaren Kräfte verändern sich durch den Sensor nur unwesentlich.

Eine andere, besonders vorteilhafte Weiterbildung des erfindungsgemäßen Verfahrens ist dadurch gegeben, dass die Trennfuge auf einer Stirnfläche des Gehäuses angebracht wird. Hierdurch ist eine Beschädigung der Messzelle während des Trennvorganges weitgehend ausgeschlossen, da die Schneidrichtung beim Anbringen der Trennfuge nicht in Richtung der Messzelle weist. Dadurch trifft ein versehentlich zu weit in das Innere des Gehäuses hineinreichendes Schneidwerkzeug nicht auf die Messzelle.

Eine Weiterbildung der Erfindung ist dann besonders vorteilhaft, wenn das Gehäuse mit einer Öffnung versehen wird, durch die elektrische Kontaktmittel für die Messzelle hindurchführbar sind. Dadurch kann eine problemlose Verlegung im Inneren des Gehäuses erfolgen, wobei auch ein späterer Abgleich der Messzelle leicht vorgenommen werden kann.

Eine Weiterbildung des erfindungsgemäßen Verfahrens ist dann besonders günstig, wenn die Messzelle und das Gehäuse mit axialem Spiel zu einer Baueinheit verbunden werden. Dadurch führen beispielsweise Wärmedehnungen nicht zu einer Veränderung der Messwerte, wie sie anderenfalls durch eine Stauchung der Messzelle entstehen könnten.

Besonders einfach ist auch eine Weiterbildung des Verfahrens, wenn das Gehäuse durch miteinander zu verbindende Abschnitte der Lenkung geformt wird. Hierdurch entfällt das Gehäuse als separates Bauteil, indem die Lenkung mit Vertiefungen versehen wird, welche die Messzelle umschließen. Es muss daher lediglich die Messzelle in die Vertiefung eingesetzt werden und die beiden Abschnitte der Lenkung miteinander verbunden werden, was zu einer Reduzierung des Aufwandes bei der Montage führt.

Eine Ausführungsform des erfindungsgemäßen Verfahrens ist besonders günstig, wenn die Trennfuge durch Wasserstrahl- oder Laserschneiden hergestellt wird. Hierbei lässt sich die gewünschte Trennfuge mit einer einstellbaren Schnittiefe in dem Gehäuse anbringen, so dass eine Beschädigung der darunter liegenden Messzelle ausgeschlossen ist. Hierzu lässt sich die Tiefe der Trennfuge mit ausreichender Genauigkeit einstellen, so dass insbesondere auch das Anbringen der Trennfuge an der Mantelfläche erheblich vereinfacht wird. Außerdem kann auf diese Weise eine sehr schmale Trennfuge mit großer Exaktheit erzeugt werden.

Das zweitgenannte Problem, einen Sensor mit einem Gehäuse und einer Messzelle zur Erfassung eines Drehmomentes, insbesondere eines in eine Lenkwelle eines Kraftfahrzeugs eingeleiteten Drehmomentes zu schaffen, welcher einen Drehwinkelbegrenzer zur Begrenzung einer Drehwinkeldifferenz zwischen dem Gehäuse und der Meßzelle zum Schutz der Messzelle vor Überlastung aufweist, wird erfindungsgemäß dadurch erreicht, dass der Drehwinkelbegrenzer durch eine Trennfuge vorbestimmter Breite in dem mit der Messzelle zu einer Baueinheit verbundenen Gehäuse gebildet ist. Die Trennfuge ist daher unabhängig von bei der Montage der Messzelle und des Gehäuses vorhandenen Toleranzen. Die Trennfuge, welche durch ihre Breite zugleich die maximale Drehwinkeldifferenz zwischen Messzelle und Gehäuse bestimmt, wird hierzu in dem Gehäuse angeordnet, welches mit der Messzelle zu einer Baueinheit verbunden ist. Dadurch sind Montagefehler weitgehend ausgeschlossen und die Genauigkeit der so erfassten Messwerte wesentlich verbessert.

Eine besonders vorteilhafte Weiterbildung der Erfindung ist dann gegeben, wenn das Gehäuse durch einen Abschnitt der Lenkwelle gebildet ist. Hierdurch ist der Sensor zugleich platzsparend ausführbar und einfach in der Herstellung. Dabei ist die Belastbarkeit der Anordnung gegenüber einer Ausführung ohne Sensor nahezu unverändert.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine seitliche, teilweise geschnittene Darstellung eines erfindungsgemäßen Sensors,
- Fig. 2: den Sensor in einer entlang der Linie II-II geschnittenen Ansicht,
- Fig. 3: den um 90° gedrehten Sensor in einer seitlichen, teilweise geschnittenen Darstellung.

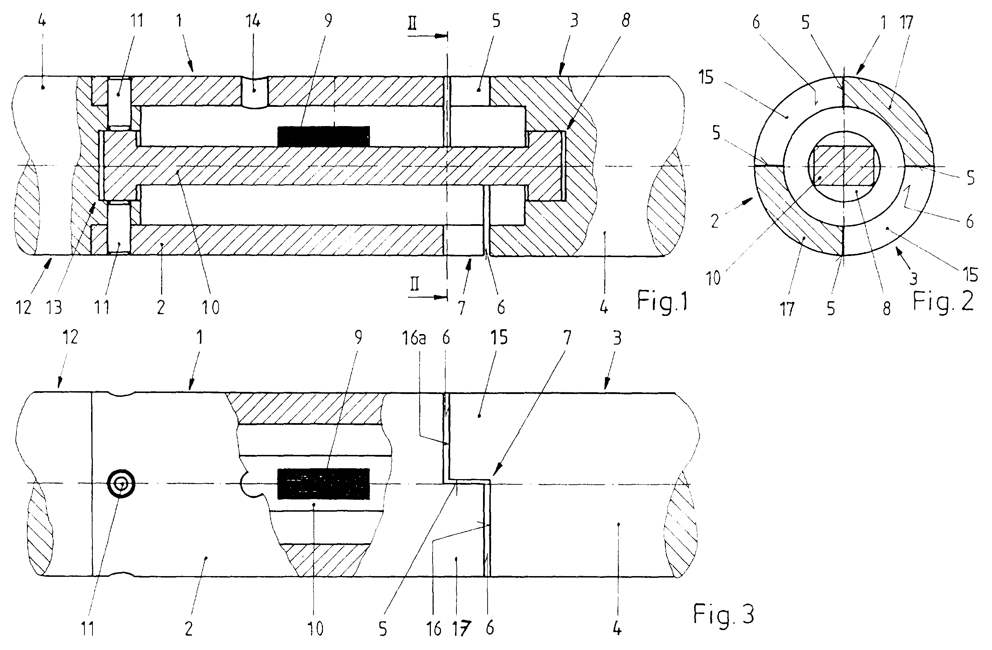

Figur 1 zeigt eine teilweise geschnittene Seitenansicht eines Sensors 1. Der Sensor 1 hat ein Gehäuse 2, welches zunächst mit einem Abschnitt 3 einer Lenkwelle 4 einteilig verbunden ist, wobei an dem Abschnitt 3 ein hier nicht dargestelltes Lenkrad eines Kraftfahrzeuges angeschlossen ist. In der dargestellten Position ist das Gehäuse 2 bereits entlang zur Drehachse längs verlaufender Trennfugen 5 und hierzu quer verlaufender Trennfugen 6 von dem Abschnitt 3 der Lenkwelle 4 getrennt. Zum besseren Verständnis wird zunächst auf die Figur 3 Bezug genommen, die den nach Art einer Klauenkupplung gebildeten Verlauf der zueinander rechtwinklig verlaufenden Trennfugen 5 und 6 zeigt. Hierdurch greifen jeweils Klauen 17 des Gehäuses 2 in spiegelbildlich ausgeführte Vertiefungen 16 des Abschnitts 3 der Lenkwelle 4 und Klauen 15 des Abschnittes 3 in entsprechende Vertiefungen 16a des Gehäuses 2. Die maximale Drehwinkeldifferenz ist daher durch das Spiel der ineinandergreifenden Klauen 15, 17 und der entsprechenden Vertiefungen 16, 16a, also durch die Breite der längsverlaufenden Trennfuge 5, gebildet, die somit als Drehwinkelbegrenzer 7 wirkt.

Zur weiteren Erläuterung wird nunmehr wieder auf Figur 1 Bezug genommen. Der Abschnitt 3 der Lenkwelle 4 hat eine Aufnahme 8, in die ein eine Messzelle 9 tragender Torsionsstab 10 eingreift. Das Gehäuse 2 ist mittels zweier einander gegenüberliegender Passstifte 11 mit einem weiteren Abschnitt 12 der Lenkwelle 4 verbunden, wobei an den Abschnitt 12 hier nicht dargestellte lenkbare Räder des Kraftfahrzeugs angeschlossen sind. Dieser Abschnitt 12 ist mit einer formschlüssigen Aufnahme 13 ausgestattet, in welcher der Torsionsstab 10 weitgehend spannungsfrei fixiert ist. Die beiden Abschnitte 3 und 12 sind mittels des Torsionsstabes 10 miteinander verbunden. Das Gehäuse 2 hat eine Öffnung 14 für ein nicht dargestelltes elektrisches Kontaktmittel, welches mit der Messzelle 9 verbunden ist.

Figur 2 zeigt den Sensor 1 in einer entlang der Linie II-II geschnittenen Ansicht. Zu erkennen sind die zwei aus dem Gehäuse 2 treppenförmig herausgeschnittenen und in einer Schnittdarstellung gezeigten Klauen 17 und die entsprechenden, zwischen diese Klauen 17 greifenden Klauen 15 des Abschnittes 3 der Lenkwelle 4. Das Gehäuse 2 hat hierzu vier parallele, längs verlaufende Trennfugen 5, deren Breite für eine begrenzte Drehbeweglichkeit des Gehäuses 2 gegenüber dem Abschnitt 3 der Lenkwelle 4 bestimmend ist. Zu erkennen sind weiterhin die quer zur Drehachse in der Bildebene verlaufende Trennfugen 6. Der Torsionsstab 10 ist in eine Aufnahme 8 des Abschnittes 3 kraftschlüssig eingesetzt, welche als Bohrung ausgeführt ist und daher ein spannungsfreies, insbesondere torsionsfreies Einsetzen des Torsionsstabes 10 mit beliebigem Drehwinkel erlaubt. Der Torsionsstab 10 wird anschließend durch Ausfüllen der verbleibenden Freiräume mit Klebstoff fixiert, wobei eine spielfreie Verbindung erreicht wird.

Figur 3 zeigt in einer teilweise geschnittenen Darstellung den Sensor 1 in einer um 90° gedrehten Position. Zu erkennen ist das Gehäuse 2, welches entlang der zueinander rechtwinklig und treppenförmig verlaufenden Trennfugen 5 und 6 von dem Abschnitt 3 der Lenkwelle 4 getrennt ist. Das Gehäuse 2 ist an seinem anderen Ende auf den Abschnitt 12 aufgeschoben und mittels der Passstifte 11 fixiert. Das Gehäuse 2 umschließt den die Messzelle 9 tragenden Torsionsstab 10, welcher die beiden Abschnitte 3 und 12 miteinander verbindet. Die längs verlaufende Trennfuge 5 wirkt bei zu großen Drehkräften als Drehwinkelbegrenzer 7, so dass darüber hinausgehende Kräfte mittels des Gehäuses 2 von dem Abschnitt 3 unmittelbar auf den Abschnitt 12 übertragen werden. Die Breite der Trennfuge 5 bestimmt dabei die maximale Drehwinkeldifferenz zwischen der zunächst zu einer Baueinheit verbundenen Messzelle 9 und dem Gehäuse 2. Die Toleranzwerte der einzelnen Bauteile sind dadurch für die erst im Anschluss angebrachte Trennfuge 5 ohne Bedeutung. Die quer verlaufenden Trennfugen 6 haben keinen Einfluss auf die Drehzahldifferenz und können beispielsweise auch schon vorab an dem Abschnitt 3 angebracht werden.

Hergestellt wird der Sensor 1 in der Weise, daß in einem ersten Fertigungsschritt der Torsionsstab 10 in die Aufnahme 8 des Abschnittes 3 der Lenkwelle 4 eingepreßt wird. Damit bilden Abschnitt 3 und Torsionsstab 10 eine feste Einheit. Daraufhin wird der Torsionsstab 10 in die Aufnahme 13 des Abschnittes 12 gepreßt. Abschnitt 3 bzw. Gehäuse 2 und Abschnitt 12 sind dabei ineinander mit Spiel geführt und zunächst mit Klebstoff aneinander fixiert. Danach erfolgt ein Verstiften des Gehäuses 2 mit dem Abschnitt 12 mittels der Passstifte 11. Durch die Klebung wird verhindert, daß beim Verstiften Spannungen z.B. aufgrund von Biegung oder Verdrehung im Torsionsstab 10 entstehen. In diesem Zustand ist das Gehäuse 2 ein einziges Bauteil bildend mit dem Abschnitt 3 verbunden und die Bauelemente Abschnitt 3, Torsionsstab 10 und Abschnitt 12 bilden eine starre Einheit. In einem letzten Fertigungsschritt werden mit Hilfe eines Laser- oder Wasserstrahls die längsverlaufenden Trennfugen 5 und die quer verlaufenden Trennfugen 6 (wenn letztere nicht bereits vorher angebracht worden sind) in den Abschnitt 3 eingebracht, wodurch das Gehäuse 2 nur noch mittelbar über den Abschnitt 12 und den Torsionsstab 10 mit dem Abschnitt 3 verbunden ist. Auf diese Weise läßt sich unter Ausschluß sämtlicher Zusammenbautoleranzen ein sehr exaktes Maß für die Trennfugen 5 und damit für einen mechanischen Überlastschutz des Sensors 1 einstellen.

## Patentansprüche

1. Verfahren zur Herstellung eines ein Gehäuse und eine Messzelle aufweisenden Sensors zur Erfassung eines Drehmomentes, insbesondere eines in eine Lenkwelle eines Kraftfahrzeugs eingeleiteten Drehmomentes, mit einem Drehwinkelbegrenzer zur Begrenzung einer Drehwinkeldifferenz zwischen dem Gehäuse und der Messzelle zum Schutz des Sensors vor Überlastung, **dadurch gekennzeichnet,** dass zunächst die Messzelle (9) und das Gehäuse (2) zu einer Baueinheit verbunden werden und anschließend der Drehwinkelbegrenzer (7) durch Trennen des Gehäuses (2) und der Messzelle (9) entlang einer vorbestimmten Trennfuge (5, 6) derart gebildet wird, dass ein erstes Gehäuseteil (Abschnitt 3) mit einem ersten Ende und ein zweites Gehäuseteil (Gehäuse 2) mit einem zweiten Ende der Messzelle (9) verbunden bleibt und dass eine begrenzte Drehwinkeldifferenz zwischen den Gehäuseteilen (2, 3) und der Messzelle (9) möglich ist.

2. Verfahren nach Anspruch 1, **dadurch gekennzeichnet,** dass die Trennfuge (5, 6) zur formschlüssigen Verbindung der Gehäuseteile (2, 3) ausgeführt wird.

3. Verfahren nach Anspruch 1 oder 2, **dadurch gekennzeichnet,** dass die Trennfuge (5, 6) zur Verbindung der Gehäuseteile (2, 3) nach Art einer Klauenverbindung (15, 17) ausgeführt wird.

4. Verfahren nach einem der vorhergehenden Ansprüche, **dadurch gekennzeichnet,** dass die Messzelle (9) mittels eines Passstiftes (11) mit dem Gehäuse (2) verbunden wird.

5. Verfahren nach einem der vorhergehenden Ansprüche, **dadurch gekennzeichnet,** dass die Messzelle und das Gehäuse miteinander zu einer Baueinheit verklebt werden.

6. Verfahren nach einem der vorhergehenden Ansprüche, **dadurch gekennzeichnet,** dass die Trennfuge (5, 6) auf einer Mantelfläche des Gehäuses (2, 3) angebracht wird.

7. Verfahren nach einem der vorhergehenden Ansprüche, **dadurch gekennzeichnet,** dass die Trennfuge auf einer Stirnfläche des Gehäuses angebracht wird.

8. Verfahren nach einem der vorhergehenden Ansprüche, **dadurch gekennzeichnet,** dass das Gehäuse (2) mit einer Öffnung (14) versehen wird, durch die elektrische Kontaktmittel für die Messzelle (9) hindurchführbar sind.

9. Verfahren nach einem der vorhergehenden Ansprüche, **dadurch gekennzeichnet,** dass die Messzelle und das Gehäuse mit axialem Spiel zu einer Baueinheit verbunden werden.

10. Verfahren nach einem der vorhergehenden Ansprüche, **dadurch gekennzeichnet,** dass das Gehäuse durch miteinander zu verbindende Abschnitte (3, 4) der Lenkung geformt wird.

11. Verfahren nach einem der vorhergehenden Ansprüche, **dadurch gekennzeichnet,** dass die Trennfuge (5, 6) durch Wasserstrahl- oder Laserschneiden hergestellt wird.

12. Sensor mit einem Gehäuse und einer Messzelle zur Erfassung eines Drehmomentes, insbesondere eines in eine Lenkwelle eines Kraftfahrzeuges eingeleiteten Drehmomentes, welcher einen Drehwinkelbegrenzer zur Begrenzung einer Drehwinkeldifferenz zwischen dem Gehäuse und der Messzelle zum Schutz der Messzelle vor Überlastung aufweist, **dadurch gekennzeichnet,** dass der Drehwinkelbegrenzer (7) durch eine Trennfuge (5, 6) vorbestimmter Breite in dem mit der Messzelle (9) zu einer Baueinheit verbundenen Gehäuse (2) gebildet ist.

13. Sensor nach Anspruch 12, **dadurch gekennzeichnet,** dass das Gehäuse (2) durch einen Abschnitt (3, 12) der Lenkwelle (4) gebildet ist.
